# EUROPÄISCHE PATENTSCHRIFT

(11) **EP 3 922 942 B1**
(45) Veröffentlichungstag und Bekanntmachung des Hinweises auf die Patenterteilung: **29.03.2023**
(21) Anmeldenummer: 20178903.9
(22) Anmeldetag: 09.06.2020
(51) Int. Cl.: G01B 11/25

(54) **VERFAHREN ZUM BESTIMMEN EINER DREIDIMENSIONALEN FORM MINDESTENS EINES STÜCKS EINES KÖRPERS UND SYSTEM ZUM BESTIMMEN EINER DREIDIMENSIONALEN FORM MINDESTENS EINES STÜCKS EINES KÖRPERS**
METHOD FOR DETERMINING A THREE-DIMENSIONAL SHAPE OF AT LEAST ONE PIECE OF A BODY AND SYSTEM FOR DETERMINING A THREE-DIMENSIONAL SHAPE OF AT LEAST ONE PIECE OF A BODY
PROCÉDÉ DE DÉTERMINATION D'UNE FORME TRIDIMENSIONNELLE D'AU MOINS UNE PIÈCE D'UN CORPS ET SYSTÈME DE DÉTERMINATION D'UNE FORME TRIDIMENSIONNELLE D'AU MOINS UNE PIÈCE D'UN CORPS

(43) Veröffentlichungstag der Anmeldung: 15.12.2021
(73) Patentinhaber: Optonic GmbH, 79106 Freiburg (DE)
(72) Erfinder: Voigt, Rainer, 79102 Freiburg (DE)
(74) Vertreter: Patentanwälte Ruff, Wilhelm, Beier, Dauster & Partner mbB

(56) Entgegenhaltungen:
- US-A1- 2012 063 672
- TANG SUMING ET AL: "Robust pattern decoding in shape-coded structured light", OPTICS AND LASERS IN ENGINEERING, ELSEVIER, AMSTERDAM, NL, Bd. 96, 3. Mai 2017 (2017-05-03), Seiten 50-62, XP085032239, ISSN: 0143-8166, DOI: 10.1016/J.OPTLASENG.2017.04.008

## Beschreibung

### ANWENDUNGSGEBIET UND STAND DER TECHNIK

Tang, Suming, et al. "Robust Pattern Decoding in Shape-Coded Structured Light." Optics and Lasers in Engineering, vol. 96, 2017, pp. 50-62, offenbart ein Verfahren zum Bestimmen einer dreidimensionalen Form eines Objekts, wobei ein Muster aus binären Codes auf das Objekt projiziert wird, dessen reflektiertes Bild mit einer Kamera aufgenommen wird, die Codes mittels eines trainierten neuronalen Netzes in dem Bild klassifiziert werden und schließlich die Form berechnet wird.

Die Erfindung bezieht sich auf ein Verfahren zum Bestimmen einer dreidimensionalen Form mindestens eines Stücks eines Körpers und ein System zum Bestimmen einer dreidimensionalen Form mindestens eines Stücks eines Körpers.

### AUFGABE UND LÖSUNG

Der Erfindung liegt als Aufgabe die Bereitstellung eines Verfahrens zum Bestimmen einer dreidimensionalen Form mindestens eines Stücks eines Körpers und eines Systems zum Bestimmen einer dreidimensionalen Form mindestens eines Stücks eines Körpers zugrunde, das jeweils verbesserte Eigenschaften aufweist.

Die Erfindung löst diese Aufgabe durch die Bereitstellung eines Verfahrens mit den Merkmalen des Anspruchs 1 und eines Systems mit den Merkmalen des Anspruchs 14. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Bestimmen einer dreidimensionalen Form, insbesondere von Werten der Form, mindestens, insbesondere nur, eines Stücks, insbesondere eines Oberflächenstücks, bzw. eines Teils, insbesondere eines Oberflächenteils, eines, insbesondere dreidimensionalen, Körpers ausgebildet bzw. konfiguriert bzw. vorgesehen. Das Verfahren umfasst bzw. weist die Schritte auf: a) Projizieren, insbesondere automatisches und/oder optisches Projizieren, eines Figurenmusters auf mindestens das Stück des Körpers. Das Figurenmuster unprojiziert bzw. unverformt, insbesondere eben bzw. plan, umfasst bzw. weist einen sich in, insbesondere mindestens, einer Dimension bzw. einer Richtung, insbesondere räumlich, wiederholenden bzw. periodisch identisch auftretenden Bereich von erkennbaren Figuren auf. b) Aufnehmen, insbesondere automatisches und/oder optisches Aufnehmen, eines Bilds des, insbesondere vollständigen, projizierten Figurenmusters auf mindestens dem Stück des Körpers. c) Bestimmen, insbesondere automatisches Bestimmen, von, insbesondere den, Figuren, insbesondere jeweils, in dem aufgenommenen Bild mittels Erkennens, insbesondere automatischen Erkennens, mittels eines, insbesondere künstlichen, neuronalen Netzes und mittels eines, insbesondere jeweiligen, Bereichsindex, insbesondere eines Werts des Bereichsindex, des entsprechenden, insbesondere jeweiligen, Bereichs. Das neuronale Netz ist, insbesondere nur, mittels Trainings-Bilder von, insbesondere nur, Ausschnitten des Figurenmusters, insbesondere automatisch, verschieden verformt zum, insbesondere zu dem, Erkennen der Figuren in dem, insbesondere entsprechenden, Bereich trainiert, insbesondere automatisch trainiert, d) Bestimmen, insbesondere automatisches Bestimmen, der dreidimensionalen Form, insbesondere der Werte der Form, mindestens des Stücks des Körpers basierend auf den, insbesondere erkannten und, bestimmten Figuren.

Dies ermöglicht insgesamt einen geringen Aufwand, insbesondere Rechenaufwand, zu dem Bestimmen der Figuren und somit ein zeitlich schnelles Bestimmen der Figuren und somit ein zeitlich schnelles Bestimmen der dreidimensionalen Form, insbesondere im Unterschied zu einem vergleichbaren Figurenmuster ohne einen sich wiederholenden Bereich. Insbesondere braucht zwar zu dem Bestimmen der Figuren der Bereichsindex berücksichtigt werden. Jedoch kann das neuronale Netz, insbesondere können die dafür verwendeten Matrizen, klein sein. Dies überkompensiert das Berücksichtigen des Bereichsindex.

Insbesondere kann das Figurenmuster unprojiziert durch den sich in der Dimension wiederholenden Bereich von erkennbaren Figuren definiert bzw. gebildet sein.

Der Bereich kann durch die erkennbaren Figuren definiert bzw. gebildet sein.

Das Figurenmuster unprojiziert und/oder der Bereich können/kann, insbesondere jeweils, rechteckig sein.

Vorzugsweise kann der Bereich sich in nur einer einzigen Dimension wiederholen. Insbesondere kann der Bereich als Streifen bezeichnet werden. Alternativ kann der Bereich sich in zwei, insbesondere zueinander orthogonalen, Dimensionen wiederholen.

Das Figurenmuster kann ein Linien- und/oder Kreismuster aufweisen, insbesondere sein, und die, insbesondere erkennbaren und/oder erkannten, Figuren können Linien und/oder Kreise aufweisen, insbesondere sein.

Die Figuren können von Figurenindexen verschieden, insbesondere verschiedenartig, sein.

Das, insbesondere projizierte, Figurenmuster kann, insbesondere optisch, aufnehmbar sein.

Das, insbesondere aufgenommene, Bild kann alle, insbesondere sich wiederholenden, Bereiche mindestens teilweise des projizierten Figurenmusters aufweisen.

Das Bild kann ein Digitalbild sein.

Insbesondere in dem Figurenmuster, können den, insbesondere sich wiederholenden, Bereichen jeweils verschiedene Bereichsindexe, insbesondere verschiedene Werte der Bereichsindexe, zugeordnet sein. Zusätzlich oder alternativ kann Bereichsindex als Bereichsadresse bezeichnet werden.

Der Schritt d) kann aufweisen: Bestimmen der dreidimensionalen Form mindestens des Stücks des Körpers mittels Ermittelns von, insbesondere dreidimensionalen, Positionskoordinaten, insbesondere Werten der Positionskoordinaten, für die, insbesondere erkannten und, bestimmten Figuren auf mindestens dem Stück des Körpers. Insbesondere kann die dreidimensionale Form mindestens des Stücks des Körpers durch die ermittelten Positionskoordinaten definiert bzw. gebildet sein oder werden. Zusätzlich oder alternativ kann die dreidimensionale Form mindestens des Stücks des Körpers basierend auf den ermittelten Positionskoordinaten bestimmt werden.

Der Schritt b) kann zeitlich nach dem Schritt a) ausgeführt werden. Zusätzlich oder alternativ kann der Schritt c) zeitlich nach dem Schritt b) ausgeführt werden. Weiter zusätzlich oder alternativ kann der Schritt d) zeitlich nach dem Schritt c) ausgeführt werden.

In einer Weiterbildung der Erfindung sind in dem Bereich die Figuren jeweils durch, insbesondere die, Figuren in, insbesondere nur, ihrer Umgebung, insbesondere durch eine einmalige, insbesondere räumliche, Anordnung der Figuren in dem Bereich, erkennbar. Somit brauchen zum Erkennen der Figuren diese, insbesondere jeweils, nicht im Detail, insbesondere in dem aufgenommenen Bild, aufgelöst werden zu können. Insbesondere können, insbesondere somit, die Figuren gleich sein.

In einer Weiterbildung der Erfindung umfasst bzw. weist das Verfahren den Schritt auf: Ermitteln, insbesondere automatisches Ermitteln, für die Figuren in dem aufgenommenen Bild jeweils relative, insbesondere zweidimensionale, Positionen, insbesondere Werte der relativen Positionen, insbesondere und Ausrichtungen bzw. Orientierungen, von, insbesondere den, Figuren in, insbesondere nur, ihrer Umgebung. Der Schritt c) umfasst bzw. weist auf: Eingeben, insbesondere automatisches Eingeben, für die, insbesondere zu bestimmenden, insbesondere zu erkennenden, Figuren, insbesondere jeweils, insbesondere nur, die ermittelten relativen Positionen in das neuronale Netz. Somit brauchen zum Bestimmen, insbesondere zum Erkennen, der Figuren jeweils relative Positionen von Figuren in nicht dem vollständigen aufgenommenen Bild ermittelt zu werden und in das neuronale Netz eingegeben zu werden. Dies ermöglicht insgesamt einen besonders geringen Aufwand zu dem Bestimmen, insbesondere dem Erkennen, der Figuren und somit ein besonders zeitlich schnelles Bestimmen, insbesondere Erkennen, der Figuren und somit ein besonders zeitlich schnelles Bestimmen der dreidimensionalen Form.

In einer Ausgestaltung der Erfindung sind die Figuren in der Umgebung, insbesondere inklusive der zu bestimmenden, insbesondere zu erkennenden, Figur, minimal dreißig, insbesondere minimal vierzig, insbesondere minimal fünfzig, Figuren. Dies ermöglicht, dass in dem Bereich die Figuren jeweils durch die Figuren in ihrer Umgebung erkennbar sind. Insbesondere können die Figuren in der Umgebung maximal eintausend, insbesondere maximal fünfhundert, insbesondere maximal zweihundert, insbesondere maximal einhundert, Figuren sein.

Zusätzlich oder alternativ hat bzw. weist der Bereich in der Dimension eine Bereichsabmessung, insbesondere einen Wert der Bereichsabmessung, auf. Eine Breite, insbesondere ein Wert der Breite, insbesondere in einer zu der Dimension orthogonalen Dimension oder der Dimension, und/oder eine Höhe, insbesondere ein Wert der Höhe, insbesondere in der Dimension oder einer zu der Dimension orthogonalen Dimension, der Umgebung sind/ist gleich der Bereichsabmessung. Dies ermöglicht, dass ein Informationsgehalt der Umgebung optimal verwendet werden kann, insbesondere und nicht teilweise unnötig sein braucht.

In einer Weiterbildung sind in dem Bereich den Figuren jeweils, insbesondere verschiedene, Figurenindexe, insbesondere Werte, insbesondere verschiedene Werte, der Figurenindexe, zugeordnet. Der Schritt c) umfasst bzw. weist auf: Ausgeben, insbesondere automatisches Ausgeben, von, insbesondere wahrscheinlichsten, Figurenindexen der, insbesondere erkannten, Figuren aus dem neuronalen Netz. Insbesondere kann Figurenindex als Figurenadresse bezeichnet werden.

In einer Weiterbildung der Erfindung weist das Figurenmuster ein Punktmuster auf, insbesondere ist ein Punktmuster. Die, insbesondere erkennbaren und/oder, insbesondere erkannten und, bestimmten, Figuren weisen Punkte auf, insbesondere sind Punkte. Dies ermöglicht, dass das Figurenmuster einfach sein kann bzw. die Figuren einfach sein können.

In einer Weiterbildung der Erfindung umfasst bzw. weist der Schritt a) auf: Projizieren des Figurenmusters mittels eines, insbesondere elektrischen und/oder optischen, Projektors. Der Projektor ist an einer Projektor-Position, insbesondere räumlich, angeordnet. Der Schritt b) umfasst bzw. weist auf: Aufnehmen des Bilds mittels einer, insbesondere elektrischen, Kamera. Die Kamera ist an einer Kamera-Position, insbesondere räumlich, angeordnet. Die Kamera-Position ist von der Projektor-Position verschieden. Dies ermöglicht das Bestimmen der dreidimensionalen Form mindestens des Stücks des Körpers mittels Photogrammetrie, insbesondere Triangulation. Insbesondere kann der Projektor ein Laserprojektor sein. Zusätzlich oder alternativ kann die Kamera eine Digitalkamera sein. Weiter zusätzlich oder alternativ können der Projektor und die Kamera, insbesondere fest, miteinander mechanisch verbunden, insbesondere verschraubt, sein. Insbesondere können der Projektor und die Kamera als Kamera/Projektor-Paar bezeichnet werden.

In einer Ausgestaltung der Erfindung umfasst bzw. weist das Verfahren den Schritt auf: Für die Figuren in dem aufgenommenen Bild bzw. an der Kamera-Position jeweils Einschränken, insbesondere automatisches Einschränken, bzw. Selektieren bzw. Reduzieren von möglichen bzw. infrage kommenden korrespondierenden Figuren in dem unprojizierten Figurenmuster bzw. an der Projektor-Position mittels Epipolargeometrie bzw. Kernstrahlgeometrie basierend auf einer Kalibrier-Information berücksichtigend, insbesondere über, eine, insbesondere dreidimensionale, relative Position und eine, insbesondere dreidimensionale, relative Ausrichtung bzw. Orientierung des Projektors und der Kamera zueinander. Der Schritt c) umfasst bzw. weist auf: Suchen, insbesondere automatisches Suchen, der Figuren aus bzw. in dem aufgenommenen Bild jeweils mittels des neuronalen Netzes, insbesondere nur, für die eingeschränkten möglichen korrespondierenden Figuren. Dies ermöglicht einen besonders geringen Aufwand zu dem Bestimmen, insbesondere dem Erkennen, der Figuren und somit ein besonders zeitlich schnelles Bestimmen, insbesondere Erkennen, der Figuren und somit ein besonders zeitlich schnelles Bestimmen der dreidimensionalen Form. Insbesondere können basierend auf der Kalibrier-Information die relative Position bzw. die Lage eines Zentrums, insbesondere eines Projektionszentrums, des Projektors und eines Zentrums, insbesondere eines Projektionszentrums, der Kamera bzw. der beiden Projektionszentren zueinander, die dreidimensionale Blick- bzw. Empfangsrichtung jedes Pixels, insbesondere Bildpixels, der Kamera und die dreidimensionale Strahlrichtung jedes Punkts, insbesondere Figurenmusterpunkts, des Projektors bekannt sein. Zusätzlich oder alternativ können der Projektor und die Kamera als kalibriertes Kamera/Projektor-Paar bezeichnet werden.

In einer Ausgestaltung der Erfindung umfasst bzw. weist der Schritt c) auf: Ermitteln, insbesondere automatisches Ermitteln, bzw. Auswählen des Bereichsindex des entsprechenden Bereichs basierend auf einer, insbesondere der, Kalibrier-Information berücksichtigend, insbesondere über, eine, insbesondere die und/oder dreidimensionale, relative Position und eine, insbesondere die und/oder dreidimensionale, relative Ausrichtung bzw. Orientierung des Projektors und der Kamera zueinander. Insbesondere können basierend auf der Kalibrier-Information die relative Position bzw. die Lage eines Zentrums, insbesondere eines Projektionszentrums, des Projektors und eines Zentrums, insbesondere eines Projektionszentrums, der Kamera bzw. der beiden Projektionszentren zueinander, die dreidimensionale Blick- bzw. Empfangsrichtung jedes Pixels, insbesondere Bildpixels, der Kamera und die dreidimensionale Strahlrichtung jedes Punkts, insbesondere Figurenmusterpunkts, des Projektors bekannt sein. Zusätzlich oder alternativ können der Projektor und die Kamera als kalibriertes Kamera/Projektor-Paar bezeichnet werden.

In einer Ausgestaltung der Erfindung ist die relative Ausrichtung des Projektors und der Kamera zueinander derart, dass eine, insbesondere gerade, Linie zwischen dem Projektor, insbesondere einem Zentrum des Projektors, und der Kamera, insbesondere einem Zentrum der Kamera, in etwa, insbesondere genau, parallel zu einer Dimension bzw. einer Richtung des Figurenmusters unprojiziert bzw. an der Projektor-Position orthogonal zu der Dimension ist. Dies ermöglicht ein besonders einfaches Ermitteln des Bereichsindex. Insbesondere kann etwa eine Abweichung, insbesondere eine Winkelabweichung, von maximal 10 Grad (°), insbesondere maximal 5 °, insbesondere maximal 2 °, insbesondere maximal 1 °, der Linie zu der Dimension bedeuten.

In einer Ausgestaltung der Erfindung umfasst bzw. weist der Schritt d) auf: Bestimmen der dreidimensionalen Form mindestens des Stücks des Körpers mittels Ermittelns, insbesondere automatischen Ermittelns, von, insbesondere dreidimensionalen, Positionskoordinaten, insbesondere Werten der Positionskoordinaten, für die, insbesondere erkannten und, bestimmten Figuren auf mindestens dem Stück des Körpers mittels Triangulation basierend auf einer, insbesondere der, Kalibrier-Information berücksichtigend, insbesondere über, eine, insbesondere die und/oder dreidimensionale, relative Position und eine, insbesondere die und/oder dreidimensionale, relative Ausrichtung bzw. Orientierung des Projektors und der Kamera zueinander. Insbesondere kann ein Dreieck für die Triangulation durch einen, insbesondere geraden, Strahl von einem Punkt, insbesondere einem Figurenmusterpunkt, des Projektors bzw. einen, insbesondere geraden, Projektorpunkt-Strahl, einen, insbesondere geraden, Strahl von einem Pixel, insbesondere Bildpixel, der Kamera bzw. einen, insbesondere geraden, Kamerapixel-Strahl und eine, insbesondere gerade, Linie zwischen dem Punkt des Projektors und dem Pixel der Kamera definiert bzw. gebildet sein oder werden. Zusätzlich oder alternativ können basierend auf der Kalibrier-Information die relative Position bzw. die Lage eines Zentrums, insbesondere eines Projektionszentrums, des Projektors und eines Zentrums, insbesondere eines Projektionszentrums, der Kamera bzw. der beiden Projektionszentren zueinander, die dreidimensionale Blick- bzw. Empfangsrichtung jedes Pixels, insbesondere Bildpixels, der Kamera und die dreidimensionale Strahlrichtung jedes Punkts, insbesondere Figurenmusterpunkts, des Projektors bekannt sein. Weiter zusätzlich oder alternativ können der Projektor und die Kamera als kalibriertes Kamera/Projektor-Paar bezeichnet werden.

In einer Ausgestaltung der Erfindung umfasst bzw. weist das Verfahren den Schritt auf: Ermitteln, insbesondere automatisches Ermitteln, von, insbesondere zweidimensionalen, absoluten Positionen, insbesondere Werten der absoluten Positionen, für die Figuren in dem aufgenommenen Bild. Ermitteln der relativen Positionen, soweit vorhanden, und/oder Einschränken von den möglichen korrespondierenden Figuren, soweit vorhanden, und/oder Ermitteln des Bereichsindex, soweit vorhanden, und/oder Ermitteln von den Positionskoordinaten, soweit vorhanden, basierend auf den ermittelten absoluten Positionen.

In einer Weiterbildung der Erfindung wiederholt der Bereich sich in der Dimension minimal drei und/oder maximal zehn, insbesondere fünf, mal. Dies ermöglicht einen um einen Faktor 20 bis 30 geringeren Aufwand zu dem Bestimmen, insbesondere dem Erkennen, der Figuren und somit ein um einen Faktor 20 bis 30 zeitlich schnelleres Bestimmen, insbesondere Erkennen, der Figuren und somit ein um einen Faktor 20 bis 30 zeitlich schnelleres Bestimmen der dreidimensionalen Form, insbesondere im Unterschied zu einem vergleichbaren Figurenmuster ohne einen sich wiederholenden Bereich.

Zusätzlich oder alternativ hat bzw. weist der Bereich in der Dimension eine, insbesondere die, Bereichsabmessung, insbesondere einen Wert der Bereichsabmessung, auf. Eine Breite, insbesondere ein Wert der Breite, insbesondere in einer zu der Dimension orthogonalen Dimension oder der Dimension, und/oder eine Höhe, insbesondere ein Wert der Höhe, insbesondere in der Dimension oder einer zu der Dimension orthogonalen Dimension, der Ausschnitte, insbesondere jeweils, sind/ist gleich der Bereichsabmessung. Dies ermöglicht, dass das neuronale Netz klein sein kann, insbesondere die dafür verwendeten Matrizen klein sein können.

Das erfindungsgemäße, insbesondere elektrische, System ist zum, insbesondere zu dem, Bestimmen einer, insbesondere der, dreidimensionalen Form mindestens eines, insbesondere des, Stücks eines, insbesondere des, Körpers ausgebildet bzw. konfiguriert. Das System umfasst bzw. weist einen, insbesondere den, Projektor, eine, insbesondere die, Kamera, eine, insbesondere elektrische, Bestimmungs- und Erkennungseinrichtung und eine, insbesondere elektrische, Bestimmungseinrichtung auf. Der Projektor ist zum, insbesondere zu dem, Projizieren eines, insbesondere des, Figurenmusters auf mindestens das Stück des Körpers ausgebildet bzw. konfiguriert. Das Figurenmuster unprojiziert weist einen, insbesondere den, sich in einer, insbesondere der, Dimension wiederholenden Bereich von, insbesondere den, erkennbaren Figuren auf. Die Kamera ist zum, insbesondere zu dem, Aufnehmen eines, insbesondere des, Bilds des projizierten Figurenmusters auf mindestens dem Stück des Körpers ausgebildet bzw. konfiguriert. Die Bestimmungs- und Erkennungseinrichtung ist zum, insbesondere zu dem, Bestimmen von, insbesondere den, Figuren in dem aufgenommenen Bild mittels Erkennens, insbesondere des Erkennens, mittels eines, insbesondere des, neuronalen Netzes und mittels eines, insbesondere des, Bereichsindex des entsprechenden Bereichs ausgebildet bzw. konfiguriert. Das neuronale Netz ist mittels, insbesondere der, Trainings-Bilder von, insbesondere den, Ausschnitten des Figurenmusters verschieden verformt zum, insbesondere zu dem, Erkennen der Figuren in dem Bereich trainiert. Die Bestimmungseinrichtung ist zum, insbesondere zu dem, Bestimmen der dreidimensionalen Form mindestens des Stücks des Körpers basierend auf den, insbesondere erkannten und, bestimmten Figuren ausgebildet bzw. konfiguriert.

Das System kann den/die gleichen Vorteil/e wie für das Verfahren zuvor beschrieben ermöglichen.

Insbesondere kann das System zum Ausführen eines, insbesondere des, Verfahrens wie zuvor beschrieben ausgebildet bzw. konfiguriert sein. Zusätzlich oder alternativ kann das System, insbesondere können/kann der Projektor, die Kamera, die Bestimmungs- und Erkennungseinrichtung und/oder die Bestimmungseinrichtung, teilweise oder vollständig wie für das Verfahren zuvor beschrieben ausgebildet bzw. konfiguriert sein. Weiter zusätzlich oder alternativ können/kann die Bestimmungs- und Erkennungseinrichtung und/oder die Bestimmungseinrichtung, insbesondere jeweils, einen Prozessor und/oder einen Datenspeicher aufweisen.

In einer Weiterbildung der Erfindung umfasst bzw. weist die Bestimmungs- und Erkennungseinrichtung eine CPU (Englisch: Central processing unit), eine GPU (Englisch: Graphics processing unit), ein FPGA (Englisch: Field Programmable Gate Array) und/oder einen Künstliche-Intelligenz-Hardwarebeschleuniger (Englisch: AI accelerator) für das neuronale Netz auf, insbesondere ist eine CPU, eine GPU, ein FPGA und/oder ein Künstliche-Intelligenz-Hardwarebeschleuniger. Dies ermöglicht ein besonders zeitlich schnelles Bestimmen, insbesondere Erkennen, der Figuren und somit ein besonders zeitlich schnelles Bestimmen der dreidimensionalen Form.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Perspektivansicht eines erfindungsgemäßen Systems zum Bestimmen einer dreidimensionalen Form mindestens eines Stücks eines Körpers und ein Ablaufdiagramm eines erfindungsgemäßen Verfahrens zum Bestimmen der dreidimensionalen Form mindestens des Stücks des Körpers, insbesondere ein Projizieren eines Figurenmusters auf mindestens das Stück des Körpers und ein Aufnehmen eines Bilds des projizierten Figurenmusters auf mindestens dem Stück des Körpers des Verfahrens,
- Fig. 2: eine weitere schematische Ansicht des Systems und des Verfahrens der Fig. 1, insbesondere ein Bestimmen von Figuren in dem aufgenommenen Bild mittels Erkennens mittels eines neuronalen Netzes und ein Bestimmen der dreidimensionalen Form mindestens des Stücks des Körpers basierend auf den, insbesondere erkannten und, bestimmten Figuren des Verfahrens,
- Fig. 3: eine schematische Ansicht des Bilds der Fig. 1,
- Fig. 4: eine schematische Ansicht des Figurenmusters der Fig. 1 mit Epipolarlinien einer Epipolargeometrie,
- Fig. 5: eine weitere schematische Ansicht des Figurenmusters der Fig. 1 mit Epipolarlinien der Epipolargeometrie,
- Fig. 6: eine weitere schematische Ansicht des Verfahrens der Fig. 1, insbesondere eines Einschränkens von möglichen korrespondierenden Figuren mittels der Epipolargeometrie, und
- Fig. 7: eine weitere schematische Ansicht des Verfahrens der Fig. 1, insbesondere eines Trainierens des neuronalen Netzes.

### DETAILLIERTE BESCHREIBUNG DER AUSFÜHRUNGSBEISPIELE

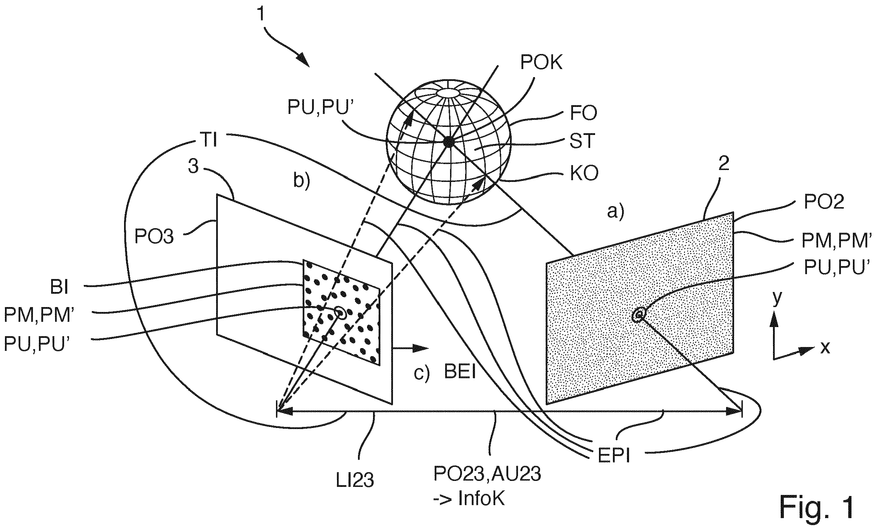

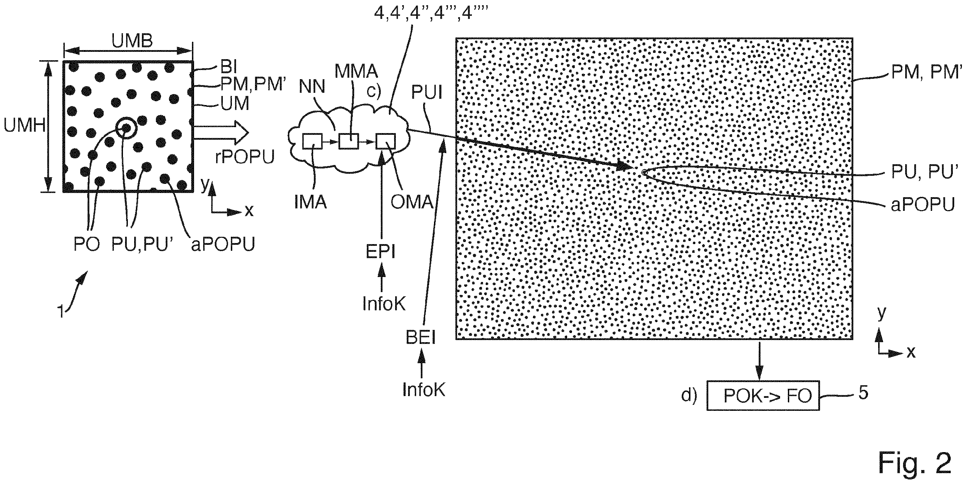

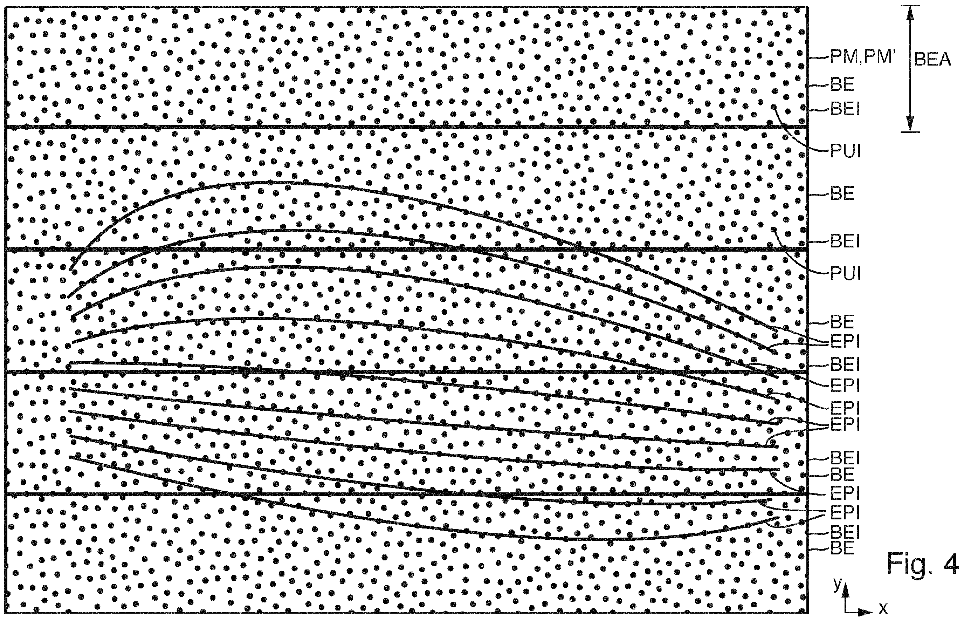

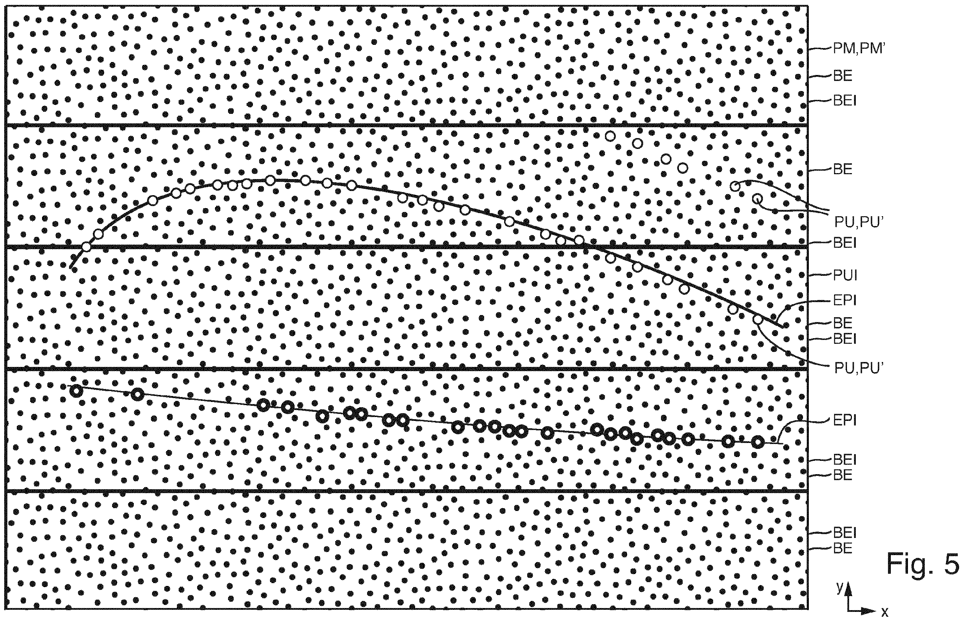

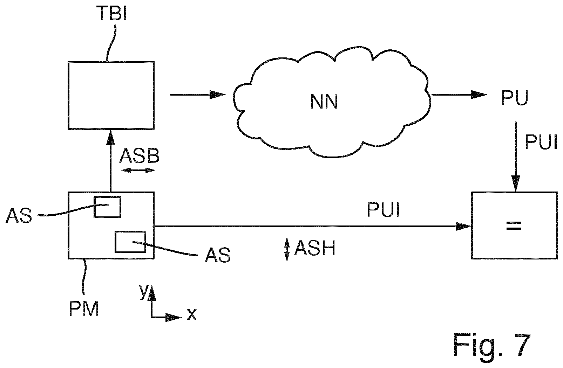

Fig. 1 und 2 zeigen ein erfindungsgemäßes System 1 zum Bestimmen einer dreidimensionalen Form FO mindestens eines Stücks ST eines Körpers KO. Das System 1 weist einen Projektor 2, eine Kamera 3, eine Bestimmungs- und Erkennungseinrichtung 4 und eine Bestimmungseinrichtung 5 auf. Der Projektor 2 ist zum Projizieren eines Figurenmusters PM auf mindestens das Stück ST des Körpers KO ausgebildet. Das Figurenmuster PM unprojiziert weist einen sich in einer Dimension y wiederholenden Bereich BE von erkennbaren Figuren PU auf, wie in Fig. 4 und 5 gezeigt. Die Kamera 3 ist zum Aufnehmen eines Bilds BI des projizierten Figurenmusters PM auf mindestens dem Stück ST des Körpers KO ausgebildet, wie in Fig. 1 bis 3 gezeigt. Die Bestimmungs- und Erkennungseinrichtung 4 ist zum Bestimmen von Figuren PU in dem aufgenommenen Bild BI mittels Erkennens mittels eines neuronalen Netzes NN und mittels eines Bereichsindex BEI des entsprechenden Bereichs BE ausgebildet, wie in Fig. 2, 4 und 5 gezeigt. Das neuronale Netz NN ist mittels Trainings-Bilder TBI von Ausschnitten AS des Figurenmusters PM verschieden verformt zum Erkennen der Figuren PU in dem Bereich BE trainiert, wie in Fig. 7 gezeigt. Die Bestimmungseinrichtung 5 ist zum Bestimmen der dreidimensionalen Form FO mindestens des Stücks ST des Körpers KO basierend auf den, insbesondere erkannten und, bestimmten Figuren PU ausgebildet.

Fig. 1, 2, 6 und 7 zeigen ein erfindungsgemäßes Verfahren zum Bestimmen der dreidimensionalen Form FO mindestens des Stücks ST des Körpers KO. Das Verfahren weist die Schritte auf: a) Projizieren des Figurenmusters PM auf mindestens das Stück ST des Körpers KO, insbesondere mittels des Projektors 2. Das Figurenmuster PM unprojiziert weist den sich in der Dimension y wiederholenden Bereich BE von erkennbaren Figuren PU auf. b) Aufnehmen des Bilds BI des projizierten Figurenmusters PM auf mindestens dem Stück ST des Körpers KO, insbesondere mittels der Kamera 3. c) Bestimmen von den Figuren PU in dem aufgenommenen Bild BI mittels Erkennens mittels des neuronalen Netzes NN und mittels des Bereichsindex BEI des entsprechenden Bereichs BE, insbesondere mittels der Bestimmungs- und Erkennungseinrichtung 4. Das neuronale Netz NN ist mittels der Trainings-Bilder TBI von den Ausschnitten AS des Figurenmusters PM verschieden verformt zum Erkennen der Figuren PU in dem Bereich BE trainiert, d) Bestimmen der dreidimensionalen Form FO mindestens des Stücks ST des Körpers KO basierend auf den, insbesondere erkannten und, bestimmten Figuren PU, insbesondere mittels der Bestimmungseinrichtung 5.

Im Detail weist die Bestimmungs- und Erkennungseinrichtung 4 eine CPU 4`, eine GPU 4", ein FPGA 4‴ und/oder einen Künstliche-Intelligenz-Hardwarebeschleuniger 4"" für das neuronale Netz NN auf, wie in Fig. 2 gezeigt.

Des Weiteren wiederholt in dem gezeigten Ausführungsbeispiel der Bereich BE sich in nur der Dimension y, wie in 4 und 5 gezeigt.

Außerdem ist in dem gezeigten Ausführungsbeispiel die Dimension y vertikal. In alternativen Ausführungsbeispielen kann die Dimension horizontal sein.

Weiter weist das Figurenmuster PM ein Punktmuster PM' auf, insbesondere ist ein Punktmuster PM`. Die, insbesondere erkennbaren und/oder, insbesondere erkannten und, bestimmten, Figuren PU weisen Punkte PU' auf, insbesondere sind Punkte PU`.

Zudem sind in dem Bereich BE die Figuren PU jeweils durch Figuren PU in ihrer Umgebung UM, insbesondere durch eine einmalige Anordnung der Figuren PU in dem Bereich BE, erkennbar, wie in Fig. 1 bis 6 gezeigt.

Des Weiteren weist das Verfahren den Schritt auf: Ermitteln für die Figuren PU in dem aufgenommenen Bild BI jeweils relative Positionen rPOPU von Figuren PU in ihrer Umgebung UM, wie in Fig. 2 gezeigt. Der Schritt c) weist auf: Eingeben für die Figuren PU die ermittelten relativen Positionen rPOPU in das neuronale Netz NN.

Im Detail sind die Figuren PU in der Umgebung UM minimal dreißig, insbesondere minimal vierzig, insbesondere minimal fünfzig, Figuren.

Zusätzlich weist der Bereich BE in der Dimension y eine Bereichsabmessung BEA auf, wie in Fig. 4 gezeigt. Eine Breite UMB, insbesondere in einer zu der, insbesondere vertikalen, Dimension y orthogonalen, insbesondere horizontalen, Dimension x, und/oder eine Höhe UMH, insbesondere in der, insbesondere vertikalen, Dimension y, der Umgebung UM sind/ist gleich der Bereichsabmessung BEA, wie in Fig. 2 gezeigt.

Außerdem sind in dem Bereich BE den Figuren PU jeweils Figurenindexe PUI zugeordnet, wie in Fig. 2 und 4 gezeigt. Der Schritt c) weist auf: Ausgeben von Figurenindexen PUI der Figuren PU aus dem neuronalen Netz NN.

In dem gezeigten Ausführungsbeispiele entspricht, insbesondere gleicht, eine Mehrzahl der Figurenindexe PUI einer Mehrzahl der Figuren PU in dem Bereich, z. B. zwischen eintausend, insbesondere zweitausend, insbesondere fünftausend, und fünfzigtausend, insbesondere zwanzigtausend, insbesondere zehntausend.

Weiter ist der Projektor 2 an einer Projektor-Position PO2 angeordnet, wie in Fig. 1 gezeigt. Die Kamera 3 ist an einer Kamera-Position PO3 angeordnet. Die Kamera-Position PO3 ist von der Projektor-Position PO2 verschieden.

Im Detail weist das Verfahren den Schritt auf: Für die Figuren PU in dem aufgenommenen Bild BI jeweils Einschränken von möglichen korrespondierenden Figuren PU in dem unprojizierten Figurenmuster PM mittels Epipolargeometrie EPI basierend auf einer Kalibrier-Information InfoK berücksichtigend eine relative Position PO23 und eine relative Ausrichtung AU23 des Projektors 2 und der Kamera 3 zueinander, wie in Fig. 1, 2 und 4 bis 6, insbesondere mittels durchgezogener und gestrichelter Linien, gezeigt. Der Schritt c) weist auf: Suchen der Figuren PU aus dem aufgenommenen Bild BI jeweils mittels des neuronalen Netzes NN, insbesondere nur, für die eingeschränkten möglichen korrespondierenden Figuren PU.

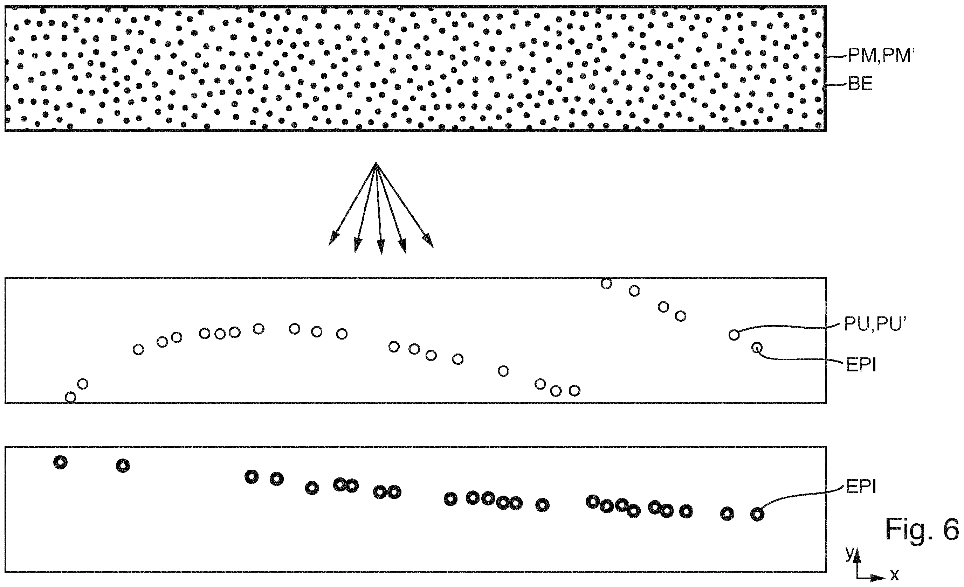

In dem gezeigten Ausführungsbeispiel spannen ein Zentrum, insbesondere ein Projektionszentrum, des Projektors 2, ein Zentrum, insbesondere ein Projektionszentrum, der Kamera 3 und ein Objektpunkt des Stücks ST des Körpers KO eine Epipolarebene auf, wie in Fig. 1 gezeigt. Die Epipolarebene schneidet das, insbesondere unprojizierte, Figurenmuster PM und das aufgenommene Bild BI in jeweils einer, insbesondere geraden, Epipolarlinie, wie in Fig. 5 und 6 beispielsweise für zwei Epipolarlinien gezeigt. Nur auf der Epipolarlinie kann eine korrespondierende Figur PU in dem unprojizierten Figurenmuster PM zu einer in dem aufgenommenen Bild gegebenen bzw. zu bestimmenden, insbesondere zu erkennenden, Figur PU liegen. Da die Epipolargeometrie EPI basierend auf der Kalibrier-Information InfoK bekannt ist, lässt sich die Suche nach der korrespondierenden Figur PU auf die Epipolarlinie einschränken.

Zudem ist oder wird in dem gezeigten Ausführungsbeispiel eine Ausgabe-Matrix OMA des neuronalen Netzes NN, wie in Fig. 2 gezeigt, insbesondere für jede Epipolarlinie individuell, um die entsprechenden Zeilen und/oder Spalten verkleinert bzw. beschnitten, so dass nur Ergebnisse für die Figuren PU berechnet werden, welche die Bedingungen aus der Epipolargeometrie EPI erfüllen.

Des Weiteren weist der Schritt c) auf: Ermitteln des Bereichsindex BEI des entsprechenden Bereichs BE basierend auf der Kalibrier-Information InfoK berücksichtigend die relative Position PO23 und die relative Ausrichtung AU23 des Projektors 2 und der Kamera 3 zueinander, wie in Fig. 2 gezeigt.

Im Detail ist die relative Ausrichtung AU23 des Projektors 2 und der Kamera 3 zueinander derart, dass eine Linie LI23 zwischen dem Projektor 2 und der Kamera 3 in etwa parallel zu der, insbesondere horizontalen, Dimension x des Figurenmusters PM unprojiziert orthogonal zu der, insbesondere vertikalen, Dimension y ist, wie in Fig. 1 gezeigt.

Außerdem weist der Schritt d) auf: Bestimmen der dreidimensionalen Form FO mindestens des Stücks ST des Körpers KO mittels Ermittelns von Positionskoordinaten POK für die, insbesondere erkannten und, bestimmten Figuren PU auf mindestens dem Stück ST des Körpers KO mittels Triangulation TI basierend auf der Kalibrier-Information InfoK berücksichtigend die relative Position PO23 und die relative Ausrichtung AU23 des Projektors 2 und der Kamera 3 zueinander, wie in Fig. 1 gezeigt.

In dem gezeigten Ausführungsbeispiel ist oder wird ein Dreieck für die Triangulation TI durch einen, insbesondere geraden, Strahl von einem Punkt, insbesondere einem Figurenmusterpunkt, des Projektors 2 bzw. einen, insbesondere geraden, Projektorpunkt-Strahl, einen, insbesondere geraden, Strahl von einem Pixel, insbesondere Bildpixel, der Kamera 3 bzw. einen, insbesondere geraden, Kamerapixel-Strahl und eine, insbesondere gerade, Linie zwischen dem Punkt des Projektors 2 und dem Pixel der Kamera 3 definiert bzw. gebildet.

Weiter ist in dem gezeigten Ausführungsbeispiel der Körper KO eine Kugel. Daher wird in dem gezeigten Ausführungsbeispiel die dreidimensionale Form FO nur des Stücks ST des Körpers KO bestimmt. In alternativen Ausführungsbeispielen kann der Körper anders sein und/oder die dreidimensionale Form des vollständigen Körpers kann bestimmt werden. Zudem ist oder wird in dem gezeigten Ausführungsbeispiels die dreidimensionale Form FO mindestens des Stücks ST, insbesondere des Kugeloberflächenstücks, des Körpers KO durch die ermittelten Positionskoordinaten POK definiert bzw. gebildet.

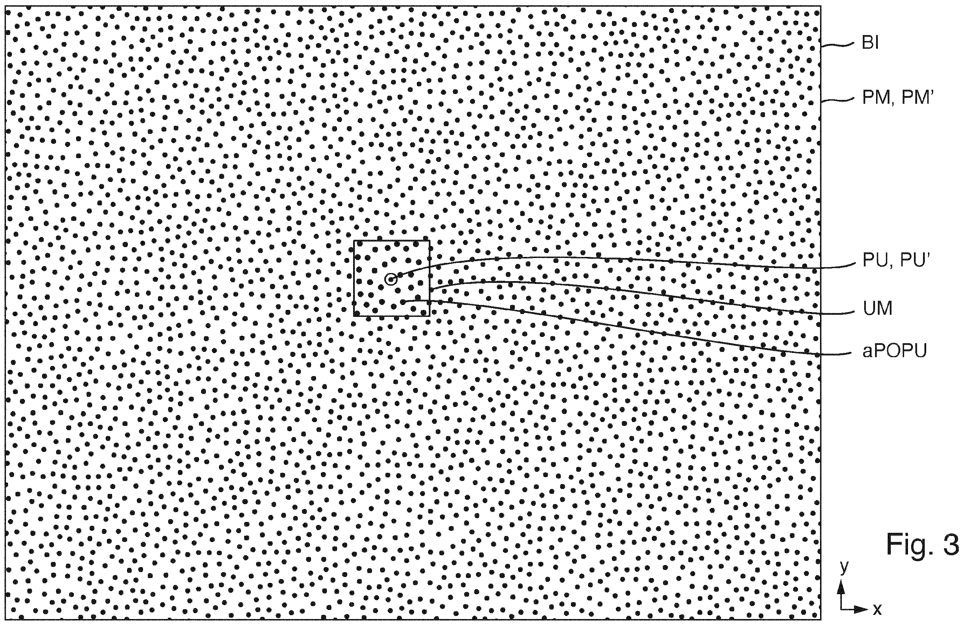

Des Weiteren weist das Verfahren den Schritt auf: Ermitteln von absoluten Positionen aPOPU für die Figuren PU in dem aufgenommenen Bild BI, wie in Fig. 2 und 3 gezeigt. Ermitteln der relativen Positionen rPOPU und/oder Einschränken von den möglichen korrespondierenden Figuren PU und/oder Ermitteln des Bereichsindex BEI und/oder Ermitteln von den Positionskoordinaten POK basierend auf den ermittelten absoluten Positionen.

Außerdem wiederholt der Bereich BE sich in der, insbesondere vertikalen, Dimension y minimal drei und/oder maximal zehn, in dem gezeigten Ausführungsbeispiel fünf, mal, wie in Fig. 4 und 5 gezeigt.

In dem gezeigten Ausführungsbeispiele entspricht, insbesondere gleicht, eine Mehrzahl der Bereichsindexe BEI einer Mehrzahl der Bereiche BEI, insbesondere fünf.

Zusätzlich weist der Bereich BE in der, insbesondere vertikalen, Dimension y die Bereichsabmessung BEA auf, wie in Fig. 4 gezeigt. Eine Breite ASB, insbesondere in der zu der, insbesondere vertikalen, Dimension y orthogonalen, insbesondere horizontalen, Dimension x, und/oder eine Höhe ASH, insbesondere in der, insbesondere vertikalen, Dimension y, der Ausschnitte AS sind/ist gleich der Bereichsabmessung BEA, wie in Fig. 7 gezeigt.

Im Detail und/oder in anderen Worten: Einmalig wird das Figurenmuster PM, insbesondere im Wesentlichen zufällig, erzeugt bzw. generiert. Im Detail sollen oder brauchen in dem gezeigten Ausführungsbeispiel die Figuren PU, insbesondere die Punkte PU`, lediglich einen gewissen Minimalabstand einhalten, der die Unterscheidbarkeit zweier Figuren PU in dem aufgenommenen Bild BI bei einer gegebenen Auflösung der Kamera 3 gewährleistet bzw. sicherstellt. Zur Erzeugung werden Figuren PU, insbesondere Punkte PU`, auf eine zufällige, insbesondere absolute, Position aPOPU einer leeren, insbesondere rechteckigen, Fläche, in dem gezeigten Ausführungsbeispiel gleich einer Breite des Figurenmusters PM mal der Bereichsabmessung BEA, geschossen bzw. platziert. Zeitlich nach der Positionierung bzw. Platzierung einer jeden Figur PU wird ein Abstand zur nächsten Figur in dem Bereich BE und in angenommenen wiederholten Bereichen BE daneben, in dem gezeigten Ausführungsbeispiel darüber und/oder darunter, ermittelt, insbesondere berechnet. Ist der Minimalabstand eingehalten, wird die Figur PU dort gelassen. Ist der Minimalabstand verletzt wird, die Figur PU entfernt. Die Erzeugung endet, wenn keine weiteren Figuren PU mehr platziert werden können. Somit ist das Figurenmuster PM bei gegebenem Minimalabstand zufällig gewählt und hat eine hohe Dichte an Figuren PU, insbesondere welche letztendlich die Ortsauflösung des Systems 1 bestimmt. Es wären hier noch einige weitere Optimierungen denkbar, wie z.B. das Testen auf zufällig entstandene, ähnliche Teile des Figurenmusters PM. Diese könnten dann z.B. lokal entfernt bzw. gelöscht und neu erzeugt bzw. generiert werden, bis sich alle Ausschnitte AS maximal unterscheiden.

Insbesondere zeitlich danach, wird das neuronale Netz NN zum Erkennen der Figuren PU in dem Bereich BE trainiert. Im Detail werden die Trainings-Bilder TBI von den Ausschnitten AS, welche jeweils eine der Figuren PU in ihrem Zentrum haben, des Figurenmusters PM, insbesondere zufällig, verschieden verformt, insbesondere verzerrt, in das neuronale Netz NN eingeben, insbesondere wobei die Ausschnitte AS jeweils mit wiederholten Inhalten der Bereiche BE daneben, in dem gezeigten Ausführungsbeispiel darüber und/oder darunter, ergänzt sind oder werden. Von dem neuronalen Netz NN wird als Ziel-Ausgabe verlangt, dass das neuronale Netz den korrekten Figurenindex PUI der Figur PU in dem Bereich BE ausgibt, z.B. eine eins für den korrekten Figurenindex PUI und Nullen für alle anderen, insbesondere falschen, Figurenindexe PUI.

Insbesondere zeitlich danach, werden der Projektor 2 und die Kamera 3, insbesondere fest, miteinander mechanisch verbunden und, insbesondere zeitlich danach, kalibriert bzw. die Kalibrier-Information InfoK berücksichtigend die relative Position PO23 und die relative Ausrichtung AU23 des Projektors 2 und der Kamera 3 zueinander wird in Kenntnis gebracht bzw. ermittelt.

Insbesondere zeitlich danach, werden aus dem für den, insbesondere vollständigen, Bereich BE trainierten neuronalen Netz NN neuronale Netze für einzelne, in dem gezeigten Ausführungsbeispiel, Zeilen der Kamera 3 extrahiert bzw. die Ausgabe-Matrix OMA des neuronalen Netzes NN wird für jede Epipolarlinie individuell verkleinert bzw. beschnitten.

Insbesondere zeitlich danach, wird, insbesondere pro Bild BI, der Projektor 2 eingeschaltet und ein, insbesondere das, Bild BI in der Kamera 3 belichtet und, insbesondere zeitlich danach, der Projektor 2 ausgeschaltet.

Insbesondere zeitlich danach, werden, insbesondere pro Bild BI, die, insbesondere absoluten, Positionen aPOPU für die Figuren PU in dem, insbesondere vollständigen, aufgenommen Bild Bl, insbesondere der Kamera 3, ermittelt bzw. extrahiert.

Insbesondere zeitlich danach, werden, insbesondere für jede aufgelöste bzw. unterscheidbare bzw. gefundene Figur PU, die relativen Positionen rPOPU von Figuren PU in ihrer Umgebung UM ermittelt und in das neuronale Netz NN, in dem gezeigten Ausführungsbeispiel der entsprechenden Zeile der Kamera 3, eingegeben.

Insbesondere zeitlich danach, liefert bzw. gibt das neuronale Netz NN den, insbesondere wahrscheinlichsten, Figurenindex PUI aus bzw. in dem Bereich BE aus.

Insbesondere zeitlich danach, wird, insbesondere für jede erkannte Figur PU, der Bereichsindex BEI des entsprechenden Bereichs BE basierend auf bzw. anhand der Kalibrier-Information InfoK berücksichtigend die relative Position PO23 und die relative Ausrichtung AU23 des Projektors 2 und der Kamera 3 zueinander bzw. der bekannten Geometrie zwischen Projektor 2 und Kamera 3 ermittelt bzw. ausgewählt und, insbesondere zeitlich danach, die Positionskoordinaten POK mittels Triangulation ermittelt (Schnittpunkt von Projektorpunkt-Strahl mit Kamerapixel-Strahl).

Weiter ist in dem gezeigten Ausführungsbeispiel das neuronale Netz NN ein sogenanntes feedforward neuronales Netz mit, insbesondere nur, einem, insbesondere einzigen, sogenannten Hidden-Layer MMA, wie in Fig. 2 gezeigt. Dies ermöglicht, dass das Verkleinern bzw. Beschneiden der Ausgabe-Matrix OMA des neuronalen Netzes NN besonders wirksam sein kann. In alternativen Ausführungsbeispielen kann das neuronale Netz anders sein.

Im Übrigen weist das neuronale Netz eine Eingabe-Matrix IMA zum Eingeben der ermittelten relativen Positionen rPOPU auf, wie in Fig. 2 gezeigt.

Wie die gezeigten und oben erläuterten Ausführungsbeispiele deutlich machen, stellt die Erfindung ein vorteilhaftes Verfahren zum Bestimmen einer dreidimensionalen Form mindestens eines Stücks eines Körpers und ein vorteilhaftes System zum Bestimmen einer dreidimensionalen Form mindestens eines Stücks eines Körpers bereit, das jeweils verbesserte Eigenschaften aufweist.

## Patentansprüche

1. Verfahren zum Bestimmen einer dreidimensionalen Form (FO) mindestens eines Stücks (ST) eines Körpers (KO), wobei das Verfahren die Schritte aufweist:
a) Projizieren eines Figurenmusters (PM) auf mindestens das Stück (ST) des Körpers (KO), wobei das Figurenmuster (PM) unprojiziert einen sich in einer Dimension (y) wiederholenden Bereich (BE) von erkennbaren Figuren (PU) aufweist,
b) Aufnehmen eines Bilds (BI) des projizierten Figurenmusters (PM) auf mindestens dem Stück (ST) des Körpers (KO),
c) Bestimmen von Figuren (PU) in dem aufgenommenen Bild (BI) mittels Erkennens mittels eines neuronalen Netzes (NN), wobei das neuronale Netz (NN) mittels Trainings-Bilder (TBI) von Ausschnitten (AS) des Figurenmusters (PM) verschieden verformt zum Erkennen der Figuren (PU) in dem Bereich (BE) trainiert ist, und mittels eines Bereichsindex (BEI) des entsprechenden Bereichs (BE), und
d) Bestimmen der dreidimensionalen Form (FO) mindestens des Stücks (ST) des Körpers (KO) basierend auf den bestimmten Figuren (PU).

2. Verfahren nach Anspruch 1,
- wobei in dem Bereich (BE) die Figuren (PU) jeweils durch Figuren (PU) in ihrer Umgebung (UM), insbesondere durch eine einmalige Anordnung der Figuren (PU) in dem Bereich (BE), erkennbar sind.

3. Verfahren nach einem der vorhergehenden Ansprüche,
- wobei das Verfahren den Schritt aufweist: Ermitteln für die Figuren (PU) in dem aufgenommenen Bild (BI) jeweils relative Positionen (rPOPU) von Figuren (PU) in ihrer Umgebung (UM), und
- wobei der Schritt c) aufweist: Eingeben für die Figuren (PU) die ermittelten relativen Positionen (rPOPU) in das neuronale Netz (NN).

4. Verfahren nach Anspruch 2 oder 3,
- wobei die Figuren (PU) in der Umgebung (UM) minimal dreißig, insbesondere minimal vierzig, insbesondere minimal fünfzig, Figuren (PU) sind, und/oder
- wobei der Bereich (BE) in der Dimension (y) eine Bereichsabmessung (BEA) aufweist, und wobei eine Breite (UMB) und/oder eine Höhe (UMH) der Umgebung (UM) gleich der Bereichsabmessung (BEA) sind/ist.

5. Verfahren nach einem der vorhergehenden Ansprüche,
- wobei in dem Bereich (BE) den Figuren (PU) jeweils Figurenindexe (PUI) zugeordnet sind, und
- wobei der Schritt c) aufweist: Ausgeben von Figurenindexen (PUI) der Figuren (PU) aus dem neuronalen Netz (NN).

6. Verfahren nach einem der vorhergehenden Ansprüche,
- wobei das Figurenmuster (PM) ein Punktmuster (PM') aufweist, insbesondere ist, und
- wobei die, insbesondere erkennbaren und/oder bestimmten, Figuren (PU) Punkte (PU') aufweisen, insbesondere sind.

7. Verfahren nach einem der vorhergehenden Ansprüche,
- wobei der Schritt a) aufweist: Projizieren des Figurenmusters (PM) mittels eines Projektors (2), wobei der Projektor (2) an einer Projektor-Position (PO2) angeordnet ist, und
- wobei der Schritt b) aufweist: Aufnehmen des Bilds (BI) mittels einer Kamera (3), wobei die Kamera (3) an einer Kamera-Position (PO3) angeordnet ist, wobei die Kamera-Position (PO3) von der Projektor-Position (PO2) verschieden ist.

8. Verfahren nach Anspruch 7,
- wobei das Verfahren den Schritt aufweist: Für die Figuren (PU) in dem aufgenommenen Bild (BI) jeweils Einschränken von möglichen korrespondierenden Figuren (PU) in dem unprojizierten Figurenmuster (PM) mittels Epipolargeometrie (EPI) basierend auf einer Kalibrier-Information (InfoK) berücksichtigend eine relative Position (PO23) und eine relative Ausrichtung (AU23) des Projektors (2) und der Kamera (3) zueinander, und
- wobei der Schritt c) aufweist: Suchen der Figuren (PU) aus dem aufgenommenen Bild (BI) jeweils mittels des neuronalen Netzes (NN), insbesondere nur, für die eingeschränkten möglichen korrespondierenden Figuren (PU).

9. Verfahren nach Anspruch 7 oder 8,
- wobei der Schritt c) aufweist: Ermitteln des Bereichsindex (BEI) des entsprechenden Bereichs (BE) basierend auf einer Kalibrier-Information (InfoK) berücksichtigend eine relative Position (PO23) und eine relative Ausrichtung (AU23) des Projektors (2) und der Kamera (3) zueinander.

10. Verfahren nach Anspruch 9,
- wobei die relative Ausrichtung (AU23) des Projektors (2) und der Kamera (3) zueinander derart ist, dass eine Linie (LI23) zwischen dem Projektor (2) und der Kamera (3) in etwa parallel zu einer Dimension (x) des Figurenmusters (PM) unprojiziert orthogonal zu der Dimension (y) ist.

11. Verfahren nach einem der Ansprüche 7 bis 10,
- wobei der Schritt d) aufweist: Bestimmen der dreidimensionalen Form (FO) mindestens des Stücks (ST) des Körpers (KO) mittels Ermittelns von Positionskoordinaten (POK) für die bestimmten Figuren (PU) auf mindestens dem Stück (ST) des Körpers (KO) mittels Triangulation (TI) basierend auf einer Kalibrier-Information (InfoK) berücksichtigend eine relative Position (PO23) und eine relative Ausrichtung (AU23) des Projektors (2) und der Kamera (3) zueinander.

12. Verfahren nach Anspruch 3 und/oder 8 und/oder 9 und/oder 11 und/oder einem davon abhängigen Anspruch,
- wobei das Verfahren den Schritt aufweist: Ermitteln von absoluten Positionen (aPOPU) für die Figuren (PU) in dem aufgenommenen Bild (BI), und
- Ermitteln der relativen Positionen (rPOPU) und/oder Einschränken von den möglichen korrespondierenden Figuren (PU) und/oder Ermitteln des Bereichsindex (BEI) und/oder Ermitteln von den Positionskoordinaten (POK) basierend auf den ermittelten absoluten Positionen (aPOPU).

13. Verfahren nach einem der vorhergehenden Ansprüche,
- wobei der Bereich (BE) sich in der Dimension (y) minimal drei und/oder maximal zehn, insbesondere fünf, mal wiederholt, und/oder
- wobei der Bereich (BE) in der Dimension (y) eine Bereichsabmessung (BEA) aufweist, und wobei eine Breite (ASB) und/oder eine Höhe (ASH) der Ausschnitte (AS) gleich der Bereichsabmessung (BEA) sind/ist.

14. System (1) zum Bestimmen einer dreidimensionalen Form (FO) mindestens eines Stücks (ST) eines Körpers (KO), insbesondere zum Ausführen eines Verfahrens nach einem der vorhergehenden Ansprüche, wobei das System (1) aufweist:
- einen Projektor (2), wobei der Projektor (2) zum Projizieren eines Figurenmusters (PM) auf mindestens das Stück (ST) des Körpers (KO) ausgebildet ist, wobei das Figurenmuster (PM) unprojiziert einen sich in einer Dimension (y) wiederholenden Bereich (BE) von erkennbaren Figuren (PU) aufweist,
- eine Kamera (3), wobei die Kamera (3) zum Aufnehmen eines Bilds (BI) des projizierten Figurenmusters (PM) auf mindestens dem Stück (ST) des Körpers (KO) ausgebildet ist,
- eine Bestimmungs- und Erkennungseinrichtung (4), wobei die Bestimmungs- und Erkennungseinrichtung (4) zum Bestimmen von Figuren (PU) in dem aufgenommenen Bild (BI) mittels Erkennens mittels eines neuronalen Netzes (NN), wobei das neuronale Netz (NN) mittels Trainings-Bilder (TBI) von Ausschnitten (AS) des Figurenmusters (PM) verschieden verformt zum Erkennen der Figuren (PU) in dem Bereich (BE) trainiert ist, und mittels eines Bereichsindex (BEI) des entsprechenden Bereichs (BE) ausgebildet ist, und
- eine Bestimmungseinrichtung (5), wobei die Bestimmungseinrichtung (5) zum Bestimmen der dreidimensionalen Form (FO) mindestens des Stücks (ST) des Körpers (KO) basierend auf den bestimmten Figuren (PU) ausgebildet ist.

15. System (1) nach Anspruch 14,
- wobei die Bestimmungs- und Erkennungseinrichtung (4) eine CPU (4'), eine GPU (4"), ein FPGA (4‴) und/oder einen Künstliche-Intelligenz-Hardwarebeschleuniger (4"") für das neuronale Netz (NN) aufweist.

## Claims

1. Method for determining a three-dimensional shape (FO) of at least one piece (ST) of a body (KO), the method including the steps of:
a) projecting a figure pattern (PM) onto at least the piece (ST) of the body (KO), the non-projected figure pattern (PM) having a repeating region (BE) of identifiable figures (PU) in a dimension (y),
b) recording an image (BI) of the projected figure pattern (PM) on at least the piece (ST) of the body (KO),
c) determining figures (PU) in the recorded image (BI) by means of an identification by means of a neural network (NN), the neural network (NN) having been trained to identify the figures (PU) in the region (BE) by means of training images (TBI) of differently deformed sections (AS) of the figure pattern (PM), and by means of a region index (BEI) of the corresponding region (BE), and
d) determining the three-dimensional shape (FO) of at least the piece (ST) of the body (KO) on the basis of the determined figures (PU).

2. Method according to Claim 1,
- wherein the figures (PU) are in each case identifiable in the region (BE) by way of figures (PU) in their surroundings (UM), in particular by way of a single arrangement of the figures (PU) in the region (BE).

3. Method according to either of the preceding claims,
- wherein the method includes the step of: for the figures (PU) in the recorded image (BI), in each case ascertaining relative positions (rPOPU) of figures (PU) in their surroundings (UM), and
- wherein step c) includes: entering the ascertained relative positions (rPOPU) for the figures (PU) into the neural network (NN).

4. Method according to Claim 2 or 3,
- wherein the figures (PU) in the surroundings (UM) total at least thirty, more particularly at least forty, more particularly at least fifty figures (PU), and/or
- wherein the region (BE) has a region size (BEA) in the dimension (y) and wherein a width (UMB) and/or a height (UMH) of the surroundings (UM) is/are equal to the region size (BEA).

5. Method according to any one of the preceding claims,
- wherein respective figure indices (PUI) are assigned to the figures (PU) in the region (BE), and
- wherein step c) includes: outputting figure indices (PUI) of the figures (PU) from the neural network (NN) .

6. Method according to any one of the preceding claims,
- wherein the figure pattern (PM) includes a point pattern (PM'), more particularly is a point pattern, and
- wherein the figures (PU), more particularly the identifiable and/or determined figures, have points (PU'), more particularly are points.

7. Method according to any one of the preceding claims,
- wherein step a) includes: projecting the figure pattern (PM) by means of a projector (2), the projector (2) being arranged at a projector position (P02), and
- wherein step b) includes: recording the image (BI) by means of a camera (3), the camera (3) being arranged at a camera position (PO3), with the camera position (PO3) differing from the projector position (PO2).

8. Method according to Claim 7,
- wherein the method includes the step of: for the figures (PU) in the recorded image (BI), in each case restricting possible corresponding figures (PU) in the non-projected figure pattern (PM) by means of an epipolar geometry (EPI) on the basis of calibration information (InfoK), with a relative position (PO23) and relative alignment (AU23) of the projector (2) and the camera (3) with respect to one another being taken into account, and
- wherein the step c) includes: in each case searching for the figures (PU) from the recorded image (BI) by means of the neural network (NN), in particular only for the restricted possible corresponding figures (PU).

9. Method according to Claim 7 or 8,
- wherein step c) includes: ascertaining the region index (BEI) of the corresponding region (BE) on the basis of calibration information (InfoK), with a relative position (PO23) and relative alignment (AU23) of the projector (2) and the camera (3) with respect to one another being taken into account.

10. Method according to Claim 9,
- wherein the relative alignment (AU23) of the projector (2) and the camera (3) with respect to one another is such that a line (LI23) between the projector (2) and the camera (3) is approximately parallel to a dimension (x) of the figure pattern (PM) orthogonal to the dimension (y) in the non-projected case.

11. Method according to any one of Claims 7 to 10,
- wherein step d) includes: determining the three-dimensional shape (FO) of at least the piece (ST) of the body (KO) by ascertaining position coordinates (POK) for the determined figures (PU) on at least the piece (ST) of the body (KO) by means of a triangulation (TI) on the basis of calibration information (InfoK), with a relative position (PO23) and relative alignment (AU23) of the projector (2) and the camera (3) with respect to one another being taken into account.

12. Method according to Claim 3 and/or 8 and/or 9 and/or 11 and/or a claim dependent thereon,
- wherein the method includes the step of: ascertaining absolute positions (aPOPU) for the figures (PU) in the recorded image (BI), and
- ascertaining the relative positions (rPOPU) and/or restricting the possible corresponding figures (PU) and/or ascertaining the region index (BEI) and/or ascertaining the position coordinates (POK) on the basis of the ascertained absolute positions (aPOPU).

13. Method according to any one of the preceding claims,
- wherein the region (BE) repeats a minimum of three times and/or a maximum of ten times, in particular five times, in the dimension (y), and/or
- wherein the region (BE) has a region size (BEA) in the dimension (y) and wherein a width (ASB) and/or a height (ASH) of the sections (AS) is/are equal to the region size (BEA).

14. System (1) for determining a three-dimensional shape (FO) of at least one piece (ST) of a body (KO), more particularly for carrying out a method according to any one of the preceding claims, wherein the system (1) comprises:
- a projector (2), wherein the projector (2) is designed to project a figure pattern (PM) on at least the piece (ST) of the body (KO), wherein the non-projected figure pattern (PM) has a repeating region (BE) of identifiable figures (PU) in a dimension (y),
- a camera (3), wherein the camera (3) is designed to record an image (BI) of the projected figure pattern (PM) on at least the piece (ST) of the body (KO),
- a determination and identification device (4), wherein the determination and identification device (4) is designed to determine figures (PU) in the recorded image (BI) by means of an identification by means of a neural network (NN), the neural network (NN) having been trained to identify the figures (PU) in the region (BE) by means of training images (TBI) of differently deformed sections (AS) of the figure pattern (PM), and by means of a region index (BEI) of the corresponding region (BE), and
- a determination device (5), wherein the determination device (5) is designed to determine the three-dimensional shape (FO) of at least the piece (ST) of the body (KO) on the basis of the determined figures (PU).

15. System (1) according to Claim 14,
- wherein the determination and identification device (4) comprises a CPU (4'), a GPU (4"), an FPGA (4'") and/or an artificial intelligence hardware accelerator (4"") for the neural network (NN).

## Revendications

1. Procédé permettant de déterminer une forme tridimensionnelle (FO) d'au moins une partie (ST) d'un corps (KO), le procédé présentant les étapes consistant à :
a) projeter un motif de symboles (PM) sur au moins la partie (ST) du corps (KO), le motif de symboles (PM) non projeté présentant une zone (BE) de symboles reconnaissables (PU) qui se répète dans une dimension (y),
b) enregistrer une image (BI) du motif de symboles (PM) projeté sur au moins la partie (ST) du corps (KO),
c) déterminer des symboles (PU) sur l'image enregistrée (BI) par une reconnaissance au moyen d'un réseau neuronal (NN), dans lequel le réseau neuronal (NN) est entraîné au moyen d'images d'entraînement (TBI) de sections (AS) du motif de symboles (PM) avec une déformation différente pour reconnaître les symboles (PU) dans la zone (BE), et au moyen d'un indice de zone (BEI) de la zone correspondante (BE), et
d) déterminer la forme tridimensionnelle (FO) au moins de la partie (ST) du corps (KO) sur la base des symboles (PU) déterminés.

2. Procédé selon la revendication 1,
- dans lequel, dans la zone (BE), les symboles (PU) sont reconnaissables respectivement par des symboles (PU) dans leur environnement (UM), en particulier par un agencement unique des symboles (PU) dans la zone (BE).

3. Procédé selon l'une quelconque des revendications précédentes,
- dans lequel le procédé l'étape consistant à : établir pour les symboles (PU) sur l'image enregistrée (BI) respectivement des positions relatives (rPOPU) de symboles (PU) dans leur environnement (UM), et
- dans lequel l'étape c) présente : entrer pour les symboles (PU) les positions relatives établies (rPOPU) dans le réseau neuronal (NN).

4. Procédé selon la revendication 2 ou 3,
- dans lequel les symboles (PU) dans l'environnement (UM) sont au minimum trente, en particulier au minimum quarante, en particulier au minimum cinquante, symboles (PU), et/ou
- dans lequel la zone (BE) présente dans la dimension (y) une cote de zone (BEA), et dans lequel une largeur (UMB) et/ou une hauteur (UMH) de l'environnement (UM) est/sont égale(s) à la cote de zone (BEA).

5. Procédé selon l'une quelconque des revendications précédentes,
- dans lequel, des indices de symbole (PUI) sont associés respectivement aux symboles (PU) dans la zone (BE), et
- dans lequel l'étape c) présente : sortir des indices de symbole (PUI) des symboles (PU) à partir du réseau neuronal (NN).

6. Procédé selon l'une quelconque des revendications précédentes,
- dans lequel le motif de symboles (PM) présente, en particulier est un motif de points (PM'), et
- dans lequel les symboles (PU), en particulier les symboles reconnaissables et/ou déterminés, présentent, en particulier sont des points (PU').

7. Procédé selon l'une quelconque des revendications précédentes,
- dans lequel l'étape a) présente : projeter le motif de symboles (PM) au moyen d'un projecteur (2), dans lequel le projecteur (2) est disposé dans une position de projecteur (PO2), et
- dans lequel l'étape b) présente : enregistrer l'image (BI) au moyen d'une caméra (3), dans lequel la caméra (3) est disposée dans une position de caméra (PO3), la position de caméra (PO3) étant différente de la position de projecteur (PO2).

8. Procédé selon la revendication 7,
- dans lequel le procédé présente l'étape consistant à : pour les symboles (PU) sur l'image enregistrée (BI), respectivement limiter les symboles (PU) correspondants possibles dans le motif de symboles (PM) non projeté au moyen d'une géométrie épipolaire (EPI) sur la base d'une information d'étalonnage (InfoK) qui tient compte d'une position relative (PO23) et d'une orientation relative (AU23) du projecteur (2) et de la caméra (3) l'un par rapport à l'autre, et
- dans lequel l'étape c) présente : chercher les symboles (PU) sur l'image enregistrée (BI) respectivement au moyen du réseau neuronal (NN), en particulier uniquement pour les symboles (PU) correspondants possibles limités.

9. Procédé selon la revendication 7 ou 8,
- dans lequel l'étape c) présente : établir l'indice de zone (BEI) de la zone correspondante (BE) sur la base d'une information d'étalonnage (InfoK) qui tient compte d'une position relative (PO23) et d'une orientation relative (AU23) du projecteur (2) et de la caméra (3) l'un par rapport à l'autre.

10. Procédé selon la revendication 9,
- dans lequel l'orientation relative (AU23) du projecteur (2) et de la caméra (3) l'un par rapport à l'autre est telle qu'une ligne (LI23) entre le projecteur (2) et la caméra (3) est approximativement parallèle à une dimension (x) du motif de symboles (PM) non projeté, orthogonal à la dimension (y).

11. Procédé selon l'une quelconque des revendications 7 à 10,
- dans lequel l'étape d) présente : déterminer la forme tridimensionnelle (FO) au moins de la partie (ST) du corps (KO) par l'établissement de coordonnées de position (POK) pour les symboles déterminés (PU) sur au moins la partie (ST) du corps (KO) au moyen d'une triangulation (TI) sur la base d'une information d'étalonnage (InfoK) qui tient compte d'une position relative (PO23) et d'une orientation relative (AU23) du projecteur (2) et de la caméra (3) l'un par rapport à l'autre.

12. Procédé selon les revendications 3 et/ou 8 et/ou 9 et/ou 11 et/ou une revendication dépendante de celles-ci,
- dans lequel le procédé présente l'étape consistant à : établir des positions absolues (aPOPU) pour les symboles (PU) sur l'image enregistrée (BI), et
- établir les positions relatives (rPOPU), et/ou limiter les symboles (PU) correspondants possibles, et/ou établir l'indice de zone (BEI), et/ou établir des coordonnées de position (POK) sur la base des positions absolues (aPOPU) établies.

13. Procédé selon l'une quelconque des revendications précédentes,
- dans lequel la zone (BE) se répète dans la dimension (y) au minimum trois fois et/ou au maximum dix fois, en particulier cinq fois, et/ou
- dans lequel la zone (BE) présente dans la dimension (y) une cote de zone (BEA), et dans lequel une largeur (ASB) et/ou une hauteur (ASH) des sections (AS) est/sont égale(s) à la cote de zone (BEA).

14. Système (1) permettant de déterminer une forme tridimensionnelle (FO) d'au moins une partie (ST) d'un corps (KO), en particulier pour exécuter un procédé selon l'une quelconque des revendications précédentes, dans lequel le système (1) présente :
- un projecteur (2), le projecteur (2) étant réalisé pour projeter un motif de symboles (PM) sur au moins la partie (ST) du corps (KO), dans lequel le motif de symboles (PM) non projeté présente une zone (BE) de symboles reconnaissables (PU) qui se répète dans une dimension (y),
- une caméra (3), la caméra (3) étant réalisée pour enregistrer une image (BI) du motif de symboles (PM) projeté sur au moins la partie (ST) du corps (KO),
- un dispositif de détermination et de reconnaissance (4), le dispositif de détermination et de reconnaissance (4) étant réalisé pour déterminer des symboles (PU) sur l'image enregistrée (BI) par une reconnaissance au moyen d'un réseau neuronal (NN), dans lequel le réseau neuronal (NN) est entraîné au moyen d'images d'entraînement (TBI) de sections (AS) du motif de symboles (PM) avec une déformation différente pour reconnaître les symboles (PU) dans la zone (BE), et au moyen d'un indice de zone (BEI) de la zone correspondante (BE), et
- un dispositif de détermination (5), le dispositif de détermination (5) étant réalisé pour déterminer la forme tridimensionnelle (FO) au moins de la partie (ST) du corps (KO) sur la base des symboles (PU) déterminés.

15. Système (1) selon la revendication 14,
- dans lequel le dispositif de détermination et de reconnaissance (4) présente une CPU (4'), une GPU (4"), un FPGA (4"') et/ou un accélérateur matériel d'intelligence artificielle (4"") pour le réseau neuronal (NN).
